# EUROPÄISCHE PATENTSCHRIFT

(11) **EP 2 913 558 B1**
(45) Veröffentlichungstag und Bekanntmachung des Hinweises auf die Patenterteilung: **12.06.2019**
(21) Anmeldenummer: 14197714.0
(22) Anmeldetag: 12.12.2014
(51) Int. Cl.: F16H 15/20, B60J 7/057

(54) **DOPPELKEGELGETRIEBEEINRICHTUNG**
DOUBLE CONE TRANSMISSION DEVICE
DISPOSITIF D'ENGRENAGE BICONIQUE

(30) Priorität: 30.12.2013 DE 102013114986
(43) Veröffentlichungstag der Anmeldung: 02.09.2015
(73) Patentinhaber: Valmet Automotive Oy, 23500 Uusikaupunki (FI)
(72) Erfinder: Kreiling, Nils, 49080 Osnabrück (DE)
(74) Vertreter: Kronthaler, Wolfgang N.K.

(56) Entgegenhaltungen:
- EP-A2- 1 870 615
- GB-A- 2 373 552

## Beschreibung

Die Erfindung betrifft eine Doppelkegelgetriebeeinrichtung mit einem ersten mit einer Antriebswelle koppelbaren Kegelrad und einem zweiten mit einer Abtriebswelle koppelbaren Kegelrad nach der im Oberbegriff des Patentanspruches 1 näher definierten Art.

Beispielsweise aus der FR 2 813 934 A1 ist eine Doppelkegelgetriebeeinrichtung mit zwei Kegelrädern bekannt, bei welcher eine Übersetzung zwischen einer mit einem ersten Kegelrad verbundenen Antriebswelle und einer mit einem zweiten Kegelrad verbundenen Abtriebswelle durch eine Kugel einstellbar ist, welche in einer translatorischen Bewegung entlang von einander zugewandten Mantelflächen der Kegelräder verlagerbar ist. Die Kugel ist auf einer Welle gelagert und wirkt gleichzeitig sowohl mit einem Bereich einer Mantelfläche des ersten Kegelrads und einem Bereich einer Mantelfläche des zweiten Kegelrads zusammen. Eine Übersetzung der Doppelkegelgetriebeeinrichtung wird durch eine Verschiebung der Kugel entlang der Mantelflächen der Kegelräder durch jeweils in den Endbereichen der Welle angeordnete Hydraulikzylinder eingestellt, wobei eine Momenten- bzw. Kraftübertragung jeweils durch Reibung zwischen der Kugel und dem jeweiligen Kegelrad stattfindet.

Um eine sichere Kraftübertragung zwischen der Kugel und den Kegelrädern zu gewährleisten, ist das Produkt aus Anpresskraft und Reibwert zwischen der Kugel und den Kegelrädern an ihren einander zugewandten Oberflächen relativ groß, so dass eine ausreichend große Reibkraft zur möglichst schlupffreien Kraft- bzw. Momentenübertragung in einem gewünschten Momentenbereich erzielt wird. Die große Reibkraft zwischen der Kugel und den Kegelrädern hat allerdings den Nachteil, dass zur Verstellung der Kugel bei dieser Ausführung große Verstellkräfte erforderlich sind.

EP1870615A2 offenbart eine Doppelkegelreibeinrichtung, welche unter den Wortlaut des Oberbegriffs des Anspruchs 1 fällt.

Es ist Aufgabe der vorliegenden Erfindung, eine Doppelkegelgetriebeeinrichtung der eingangs genannten Art zu schaffen, bei welcher ein Kraftübertragungselement mit geringem Kraftaufwand zur Einstellung einer Übersetzung bei sicherer Kraftübertragung zwischen dem Kraftübertragungselement und den Kegelrädern verlagerbar ist.

Diese Aufgabe wird mit einer Doppelkegelgetriebeeinrichtung gemäß den Merkmalen des Patentanspruches 1 gelöst.

Es wird somit eine Doppelkegelgetriebeeinrichtung mit einem ersten mit einer Antriebswelle koppelbaren Kegelrad und einem zweiten mit einer Abtriebswelle koppelbaren Kegelrad vorgeschlagen, wobei zur Kraftübertragung von dem ersten Kegelrad auf das zweite Kegelrad ein jeweils mit einem Bereich einer Mantelfläche des ersten Kegelrads und einem Bereich einer Mantelfläche des zweiten Kegelrads zusammenwirkendes Kraftübertragungselement vorgesehen ist.

Erfindungsgemäß ist vorgesehen, dass das Kraftübertragungselement ein schlauchförmiges, zumindest teilweise flexibles Element ist, wobei eine Kraftübertragung von dem Kraftübertragungselement auf das jeweilige Kegelrad durch einen von einem balligen Element verursachten Kontakt des schlauchförmige Elements mit dem jeweiligen Kegelrad stattfindet, und wobei das ballige Element zur Einstellung einer Übersetzung zwischen dem ersten Kegelrad und dem zweiten Kegelrad relativ zu dem ersten Kegelrad und dem zweiten Kegelrad verlagerbar ist.

Die erfindungsgemäße Ausführung der insbesondere stufenlos verstellbaren Doppelkegelgetriebeeinrichtung hat den Vorteil, dass eine zur Verstellung des balligen Elements benötigte Kraft gegenüber bekannten Ausführungen reduzierbar ist, da ein die Verstellung des balligen Elements maßgeblich beeinflussender Reibwert zwischen dem balligen Element und dem schlauchförmigen Element im Unterschied zu einem zwischen einem Kraftübertragungselement und den Kegelrädern vorliegenden Reibwert bei bekannten Ausführungen auf einen geringen Wert einstellbar ist ohne eine Kraftübertragung von dem schlauchförmigen Element auf die Kegelräder negativ zu beeinflussen. Eine sichere Kraftübertragung zwischen dem schlauchförmigen Element und den Kegelrädern wird dabei dadurch gewährleistet, dass ein zwischen dem schlauchförmigen Element und den Kegelrädern vorliegender Reibwert unabhängig von dem zwischen dem balligen Element und dem schlauchförmigen Element vorliegenden Reibwert gewählt und entsprechend größer als dieser sein kann.

Mit der erfindungsgemäßen Doppelkegelgetriebeeinrichtung ist vorteilhafterweise eine kontinuierlich veränderbare Übersetzung zwischen dem ersten Kegelrad und dem zweiten Kegelrad einstellbar, wodurch Übersetzungssprünge und Unterbrechungen der Lastübertragung auf einfache Weise vermieden sind. Der Einsatz einer erfindungsgemäßen Doppelkegelgetriebeeinrichtung ist insbesondere als eine der ersten Getriebestufen einer Getriebeeinheit vorteilhaft, um hierdurch beispielsweise für einen Verdeckantrieb eines Cabriolet-Fahrzeugs eine Laufzeit zu reduzieren bzw. eine bereitzustellende maximale Leistung, welche beispielsweise durch eine Motorgröße oder eine erforderliche Stromaufnahme bei einem Elektromotor gekennzeichnet ist, zu reduzieren.

Bei der erfindungsgemäßen Doppelkegelgetriebeeinrichtung erfolgt eine Kraft- bzw. Momentenübertragung zwischen der schlauchförmigen Hülle und den Kegelrädern reibschlüssig. Entsprechend weist die erfindungsgemäße Doppelkegelgetriebeeinrichtung vorteilhafterweise einen Überlastschutz auf.

Ein weiterer Vorteil der erfindungsgemäßen Doppelkegelgetriebeeinrichtung gegenüber bekannten Doppelkegelgetriebeeinrichtungen ist, dass die Verstellbarkeit nicht nur rollbewegungsabhängig ist und mithin schneller ist, und dass die Verstellbarkeit auch im Stillstand möglich ist.

Bei einer vorteilhaften Ausführung der erfindungsgemäßen Doppelkegelgetriebeeinrichtung ist es vorgesehen, dass das schlauchförmige Element zumindest bereichsweise an seiner dem balligen Element zugewandten Fläche beschichtet ist. Durch eine derartige Beschichtung, welche beispielsweise mit einem Gleitlack ausgeführt sein kann, und welche vorzugsweise eine Reibung zwischen dem balligen Element und dem schlauchförmigen Element reduziert, ist eine zur Verstellung des balligen Elements erforderliche Kraft stark reduzierbar.

Alternativ oder zusätzlich hierzu ist bei einer vorteilhaften Ausführung einer Doppelkegelgetriebeeinrichtung eine Schmierung vorgesehen, wobei ein Innenraum des schlauchförmigen Elements mit einem Schmiermittel versorgbar und versehen ist. Eine zur Verstellung des balligen Elements erforderliche Kraft kann hierdurch besonders stark reduziert werden. Um zu verhindern, dass das Schmiermittel einen zwischen dem schlauchförmigen Element und den Kegelrädern vorliegenden Reibwert negativ beeinflusst, ist das Schmiermittel insbesondere in einem abgeschlossenen Schmierraum angeordnet. Hierzu kann das schlauchförmige Element im Bereich seiner in axiale Richtung weisenden Endbereichen abgedichtet sein.

Um einen Reibwert zwischen den Kegelrädern und dem schlauchförmigen Element auf einfache Weise zu erhöhen und ein insbesondere schlupffreies Zusammenwirken in einem vorgegebenen Kraft- und Momentenbereich sicherzustellen, kann es bei einer vorteilhaften Ausführung der Erfindung vorgesehen sein, dass eine den Kegelrädern zugewandte Oberfläche des schlauchförmigen Elements aufgeraut ist.

Alternativ oder zusätzlich hierzu kann es vorgesehen sein, dass eine den Kegelrädern zugewandte Oberfläche des schlauchförmigen Elements insbesondere mit einer eine Reibung zwischen dem schlauchförmigen Element und den Kegelrädern erhöhenden Schicht beschichtet ist.

Das schlauchförmige Element ist bei einer vorteilhaften Ausführung der Erfindung mit einem Kunststoff, insbesondere einem thermoplastischen Elastomer ausgebildet. Bei beispielsweise mit einem thermoplastischen Elastomer ausgebildetem schlauchförmigem Element können Materialeigenschaften besonders flexibel und dem jeweiligen Anwendungsfall entsprechend eingestellt werden, so dass das schlauchförmige Element über einen langen Zeitraum ohne Verlust von Materialeigenschaften flexibel bleibt und den vorliegenden Kräften und Momenten sicher standhält.

Um eine Kraftübertragung zwischen dem schlauchförmigen Element und den Kegelrädern lokal sehr begrenzt durchführen zu können, kann ein mit den Kegelrädern zusammenwirkender Querschnitt des balligen Elements gegenüber einem Innendurchmesser des schlauchförmigen Elements in unbelastetem Zustand ein Übermaß aufweisen. Hierdurch wird verhindert, dass das schlauchförmige Element auch außerhalb von Bereichen, welche zur Einstellung einer aktuellen Übersetzung erforderlich sind, mit den Kegelrädern zusammenwirkt.

Eine einfache Verlagerungsbewegung des balligen Elements wird bei einer vorteilhaften Ausführung der erfindungsgemäßen Doppelkegelgetriebeeinrichtung dadurch erreicht, dass das ballige Element auf einer Welle gelagert ist bzw. fest mit dieser verbunden ist, wobei das ballige Element insbesondere mittels der Welle in einem Gehäuse gelagert ist.

Das schlauchförmige Element kann über eine Lagerung drehbar in einem Gehäuse gelagert sein, wobei die Lagerung des schlauchförmigen Elements bei einer vorteilhaften Ausführung der Erfindung integral mit dem schlauchförmigen Element ausgeführt ist. Die Lagerung kann hierzu beispielsweise durch in axialer Richtung des schlauchförmigen Elements betrachtet harte Randbereiche umgesetzt sein, welche vorzugsweise aus demselben Material wie das schlauchförmige Element ausgeführt sind. Beispielsweise bei mit einem thermoplastischen Elastomer ausgeführtem schlauchförmigem Element kann die Härte in unterschiedlichen Bereichen des schlauchförmigen Elements auf einfache Weise variiert werden und die Lagerung bzw. Lagerstellen somit integral mit dem schlauchförmigen Element ausgebildet sein. Alternativ hierzu können in den Randbereichen des schlauchförmigen Elements separate Elemente angeordnet sein, welche zur Lagerung des schlauchförmigen Elements in dem Gehäuse vorgesehen sind.

Besonders einfach ist das ballige Element zur Verstellung einer Übersetzung verlagerbar, wenn es hierzu im Wesentlichen translatorisch bewegbar ist.

Um eine Verlagerung des balligen Elements automatisiert durchführen zu können, ist bei einer vorteilhaften Ausführung einer erfindungsgemäßen Doppelkegelgetriebeeinrichtung eine Antriebseinrichtung vorgesehen. Hierbei kann insbesondere ein Elektromotor oder ein hydraulischer, pneumatischer oder dergleichen Antrieb vorgesehen sein, welcher durch den geringen Kraftaufwand zur Verlagerung des balligen Elements vorteilhafterweise klein dimensioniert werden kann.

Um in einem stationären Zustand betrachtet ein zumindest nahezu punktförmiges Zusammenwirken des Kraftübertragungselements mit dem jeweiligen Kegelrad zu ermöglichen, kann das mit einer konvexen Außenkontur ausgeführte ballige Element insbesondere als Kugel, Ellipsoid oder dergleichen ausgebildet sein, wobei das ballige Element eine senkrecht zu der Welle stehende, im Wesentlichen kreisrunde Ringlinie aufweist, welche den größten Durchmesser des balligen Elements darstellt und zum Zusammenwirken mit den Kegelrädern vorgesehen ist.

Die erfindungsgemäße Doppelkegelgetriebeeinrichtung ist besonders vorteilhaft bei Anwendungsfällen einsetzbar, bei denen über einem kompletten durchzuführenden Bewegungsablauf eines mit der Abtriebswelle gekoppelten Elements ein stark schwankender Momentenverlauf vorliegt, da durch die stufenlos variierbare Übersetzung zwischen Antriebswelle und Abtriebswelle eine zum Antrieb der Antriebswelle vorgesehene Antriebseinrichtung besonders klein dimensioniert ausgeführt werden kann. Insbesondere vorteilhaft ist der Einsatz der erfindungsgemäßen Doppelkegelgetriebeeinrichtung beispielsweise in einem Kraftfahrzeug bzw. Cabriolet-Fahrzeug. Die erfindungsgemäße Doppelkegelgetriebeeinrichtung kann dabei beispielsweise zur Einstellung einer Übersetzung zwischen einem Antrieb und einem Hauptlenker oder einer Hauptsäule zur Bewegung eines Verdecks eingesetzt werden. Alternativ hierzu kann die erfindungsgemäße Doppelkegelgetriebeeinrichtung auch zur Einstellung einer Übersetzung beim Antrieb eines Schiebedachs, eines Heckdeckels, eines Verdeckkastendeckels, von Gestängeklappen, eines Stoffhaltebügels, einer Hutablage oder anderen bewegbaren Elementen eingesetzt werden.

Weitere Vorteile und vorteilhafte Ausführungsformen der erfindungsgemäßen Doppelkegelgetriebeeinrichtung ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfacht dargestellte dreidimensionale Ansicht einer Doppelkegelgetriebeeinrichtung, mittels welcher eine Übersetzung zwischen einer Antriebswelle und einer Abtriebswelle stufenlos einstellbar ist;
- Fig. 2: eine vereinfachte Darstellung der Doppelkegelgetriebeeinrichtung der Fig. 1 in einer Seitenansicht, wobei zwischen einem ersten mit der Antriebswelle gekoppelten Kegelrad und einem zweiten mit der Abtriebswelle gekoppelten Kegelrad der Doppelkegelgetriebeeinrichtung eine erste Übersetzung einge-stellt ist;
- Fig. 3: eine der Fig. 2 entsprechende Seitenansicht der Doppelkegelgetriebeeinrichtung, wobei zwischen dem ersten Kegelrad und dem zweiten Kegelrad der Doppelkegelgetriebeeinrichtung eine zweite Übersetzung eingestellt ist; und
- Fig. 4: eine stark vereinfachte dreidimensionale Darstellung eines Cabriolet-Fahrzeugs mit einem Verdeck, bei der eine Doppelkegelgetriebeeinrichtung der Fig. 1 bis 3 zur Verdecköffnung und Verdeckschließung mit einem Hauptlenker des Verdecks zusammenwirkt.

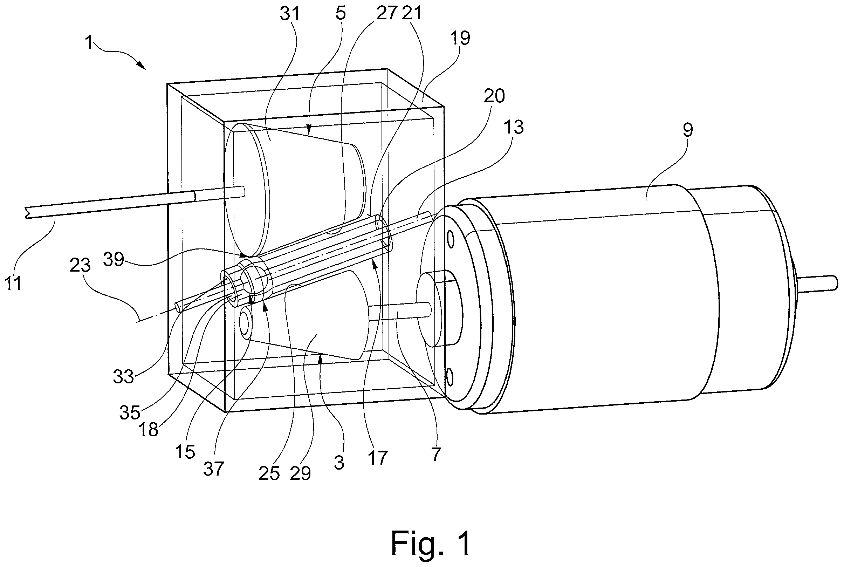

In Fig. 1 ist eine stark vereinfacht dargestellte, stufenlos verstellbare Doppelkegelgetriebeeinrichtung 1 gezeigt, welche ein erstes Kegelrad 3 und ein zweites Kegelrad 5 aufweist. Das erste Kegelrad 3 ist über eine Antriebswelle 7 mit einer hier als Elektromotor 9 ausgebildeten Antriebseinrichtung drehfest verbunden. Das zweite Kegelrad 5 wiederum ist mit einer Abtriebswelle 11 drehfest verbunden, wobei die Antriebswelle 7 und die Abtriebswelle 9 vorliegend im Wesentlichen parallel zueinander angeordnet sind.

Bei einer alternativen Ausführung der Erfindung können die Antriebswelle und die Abtriebswelle auch zueinander geneigt sein, so dass ein Winkel zwischen den Wellen vorliegt.

Weiterhin ist in der Fig. 1 ein mit einer Welle 13 fest verbundenes und vorliegend als Ellipsoid 15 ausgeführtes balliges Element ersichtlich, welches zur Einstellung einer Übersetzung zwischen dem ersten Kegelrad 3 und dem zweiten Kegelrad 5 und somit der Antriebswelle 7 und der Abtriebswelle 11 vorgesehen ist.

Sowohl die Antriebswelle 7, die Abtriebswelle 11, die Welle 13 als auch ein als schlauchförmiges Element 17 ausgeführtes Kraftübertragungselement sind in einem in der Fig. 1 lediglich schematisch dargestellten Getriebegehäuse 19 jeweils separat drehbar gelagert und abgestützt.

Das Ellipsoid 15 ist zusammen mit der Welle 13 hier koaxial und radial innerhalb des schlauchförmigen Elements 17 angeordnet.

Das schlauchförmige Element 17, welches in der Art einer Hohlwelle ausgeführt ist, ist vorliegend mit einem thermoplastischen Elastomer ausgebildet. Dieses Material hat den Vorteil, dass es mit verschiedenen Härtegraden ausgebildet werden kann. Dementsprechend ist das schlauchförmige Element 17 jeweils an seinen in axialer Richtung randseitigen Bereichen 18, 20 fest bzw. steif und in diesen Bereichen 18, 20 integral mit einer nicht näher ersichtlichen Lagerung ausgeführt, mittels welcher das schlauchförmige Element 17 in dem Getriebegehäuse 19 gelagert ist. In axialer Richtung des schlauchförmigen Elements 17 zwischen den festen radseitigen Bereichen 18, 20 ist das schlauchförmige Element 17 flexibel ausgeführt, so dass ein Innendurchmesser D_{I} und ein Außendurchmesser D_{A} des schlauchförmigen Elements 17 in dem Bereich, in dem das Ellipsoid 15 angeordnet ist, gegenüber einem unbelasteten Zustand vergrößerbar sind.

Bezüglich einer Schnittdarstellung entlang einer von der Antriebswelle 7, der Abtriebswelle 11 und der Welle 11 der Doppelkegelgetriebeeinrichtung 1 gebildeten Ebene ist eine Achse 23 der Welle 13 und des schlauchförmigen Elements 17 parallel und mittig zu einander zugewandten Kanten 25, 27 von Mantelflächen 29, 31 der Kegelräder 3, 5 angeordnet.

Eine Übersetzung zwischen der Antriebswelle 7 und der Abtriebswelle 11 wird durch eine Position des Ellipsoids 15 bezüglich der Achse 23 eingestellt, wobei das Ellipsoid 15 das schlauchförmige Element 17 jeweils senkrecht zu der Achse 23 in Bereichen 37 bzw. 39 in Kontakt mit der Mantelfläche 29 bzw. 31 des jeweiligen Kegelrads 3 bzw. 5 bringt, so dass - bei ruhendem System betrachtet - ein punktförmiger Kontakt zwischen dem schlauchförmigen Element 17 und den Kegelrädern 3 und 5 hergestellt ist. Hierbei werden lokal bzw. partiell ausreichend große Anpresskräfte erreicht, damit das schlauchförmige Element 17 bzw. das Ellipsoid 15 in einem Betrieb der Doppelkegelgetriebeeinrichtung 1 in einem gewünschten Drehmomentenbereich schlupffrei mit den Kegelrädern 3 und 5 zusammenwirkt.

Das Ellipsoid 15 weist gegenüber einem Innendurchmesser D_{I} des schlauchförmigen Elements 17 ein Übermaß auf, so dass sichergestellt werden kann, dass das schlauchförmige Element 17 lediglich in dem Bereich, in dem das Ellipsoid 15 den Innendurchmesser D_{I} und somit auch den Außendurchmesser D_{A} des schlauchförmigen Elements 17 vergrößert, mit dem jeweiligen Kegelrad 3, 5 zusammenwirkt und ansonsten zu den Kegelrädern 3, 5 zumindest geringfügig beabstandet ist.

Bei einer Drehung der Antriebswelle 7 wird durch den Kontakt des Kegelrads 3 mit der Mantelfläche 29 des Kegelrads 3 das schlauchförmige Element 17 und das Ellipsoid 15 mit der Welle 13 in entgegengesetzter Richtung wie die Antriebswelle 7 um die jeweilige Lagerung in dem Getriebegehäuse 19 gedreht. Aufgrund des durch das Ellipsoid 15 bedingten Kontakts des schlauchförmigen Elements 17 mit der Mantelfläche 31 des zweiten Kegelrads 5 wird die Drehbewegung des schlauchförmigen Elements 17 auf das zweite Kegelrad 5 übertragen, wobei dieses wiederum in entgegengesetzter Richtung wie das schlauchförmige Element 17 und somit in gleicher Richtung wie die Antriebswelle 7 angetrieben wird.

Eine Kraft- bzw. Momentenübertragung von der Antriebswelle 7 auf das schlauchförmige Element 17 und die Welle 13 bzw. von der Welle 13 und dem schlauchförmigen Element 17 auf die Abtriebswelle 11 wird jeweils durch einen Kontakt zwischen dem schlauchförmigen Element 17 und dem ersten Kegelrad 3 bzw. dem schlauchförmigen Element 17 und dem zweiten Kegelrad 5 hergestellt. Hierbei wird von dem schlauchförmigen Element 17 bzw. dem Ellipsoid 15 eine Kraft im Wesentlichen in radialer Richtung auf die Kegelräder 3, 5 übertragen. Ein Reibwert zwischen dem jeweiligen Kegelrad 3 bzw. 5 und einer den Kegelrädern 3, 5 zugewandten Oberfläche 21 des schlauchförmigen Elements 17 ist dabei derart eingestellt, dass ein Gleiten der Elemente 3, 5, 17 in einem gewünschten Kraft- bzw. Mometenbereich sicher verhindert ist.

Der Reibwert zwischen der Oberfläche 21 des schlauchförmigen Elements 17 und dem jeweiligen Kegelrad 3 bzw. 5 kann beispielsweise durch eine Materialwahl des schlauchförmigen Elements 17 bereits ausreichend groß sein oder zusätzlich dadurch erhöht sein, dass die Oberfläche 21 des schlauchförmigen Elements 17 aufgeraut ist oder mit einer den Reibwert erhöhenden Schicht beschichtet ist.

Um eine Verlagerungsbewegung des Ellipsoids 15 entlang der Achse 23 mit einem sehr geringen Kraftaufwand zu ermöglichen, kann eine dem Ellipsoid 15 zugewandte Innenfläche 17 des schlauchförmigen Elements 17 beispielsweise mit einem Gleitlack beschichtet sein. Hierdurch kann ein zwischen dem Ellipsoid 15 und dem schlauchförmigen Element 17 vorliegender Reibwert reduziert werden.

Zudem kann eine in den Figuren 1 bis 3 nicht näher ersichtliche Schmierung vorgesehen sein, so dass ein Innenraum 35 des schlauchförmigen Elements 17 mit einem Schmiermittel versehen ist. Eine zur Verlagerung des Ellipsoids 15 erforderliche Kraft kann hierdurch weiter reduziert werden. Um zu verhindern, dass das Schmiermittel in Kontakt mit den Kegelrädern 3, 5 gelangen kann und hierbei den gewünscht großen Reibwert zwischen den Kegelrädern 3, 5 und dem schlauchförmigen Element 17 reduziert, ist insbesondere in den Randbereichen 18, 20 des schlauchförmigen Elementes 17 jeweils eine Dichteinrichtung vorgesehen, so dass ein Feuchtraum im Wesentlichen auf den Innenraum 35 des schlauchförmigen Elements 17 begrenzt ist und im Bereich der Kegelräder 3, 5 ein Trockenraum vorliegt.

Zur Verlagerung des Ellipsoids 15 bzw. der Welle 13 in Richtung der Achse 23 ist vorliegend eine Antriebseinrichtng vorgesehen, welche beispielsweise einen Elektromotor aufweist. Alternativ hierzu kann eine translatorische Verstellung des Ellipsoids 15 bzw. der Welle 13 auch mittels einer hydraulischen, pneumatischen oder dergleichen Antriebseinrichtung durchgeführt werden.

Bei einer vorgegebenen Übersetzung wirkt das Ellipsoid 15 mit einer kreisförmigen Außenbahn 41 über das schlauchförmige Element 17 jeweils mit einer Ringbahn 43, 47 des ersten Kegelrads 3 und einer Ringbahn 45, 49 des zweiten Kegelrads 5 zusammen, wobei sich die aktuelle Übersetzung aus einem Verhältnis eines Durchmessers der Ringbahn 43, 47 des ersten Kegelrads 3 zu einem Durchmesser der Ringbahn 45, 49 des zweiten Kegelrads 5 ergibt.

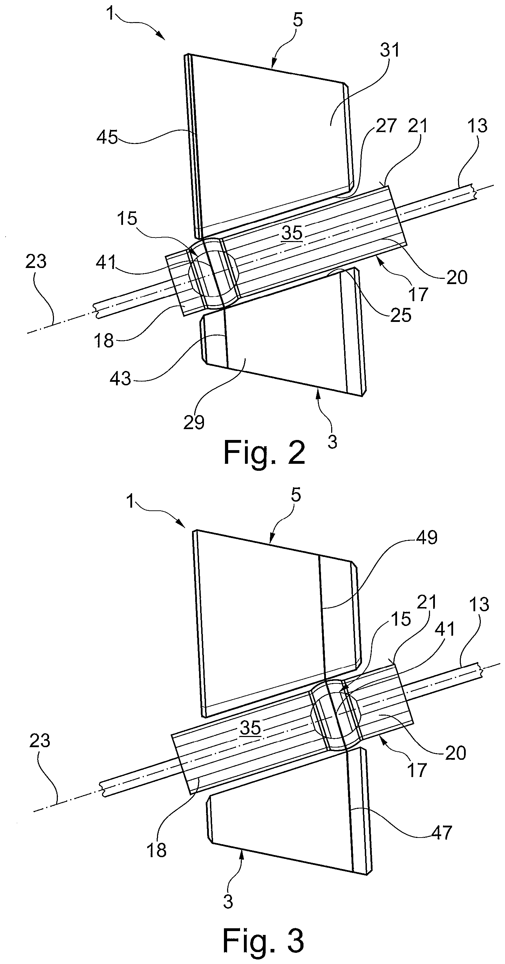

In Fig. 2 ist dabei eine erste Position des Ellipsoids 15 gezeigt, in der ein großes Übersetzungsverhältnis zwischen der Antriebswelle 7 und der Abtriebswelle 11 vorliegt, da eine einen kleinen Durchmesser aufweisende Ringbahn 43 des ersten Kegelrads 3 mit einer einen großen Durchmesser aufweisenden Ringbahn 45 des zweiten Kegelrads 5 in Wirkverbindung ist.

Fig. 3 zeigt eine zweite Position des Ellipsoids 15, in welcher das Ellipsoid 15 bezüglich der Position in Fig. 2 entlang der Achse 23 in Richtung des Elektromotors 9 verlagert ist. Hierbei liegt ein kleines Übersetzungsverhältnis zwischen der Antriebswelle 7 und der Abtriebswelle 11 vor, da eine einen großen Durchmesser aufweisende Ringbahn 47 des ersten Kegelrads 3 über das Ellipsoid 15 und das schlauchförmige Element 17 mit einer einen kleinen Durchmesser aufweisenden Ringbahn 49 des zweiten Kegelrads 5 in Wirkverbindung steht.

Mit der in den Fig. 1 bis 3 gezeigten Doppelkegelgetriebeeinrichtung 1 ist ein Übersetzungsverhältnis zwischen der Antriebswelle 7 und der Abtriebswelle 11 von 1 bis 3 einstellbar. Durch entsprechende Änderung der Geometrie der Kegelräder 3 und 5 sind allerdings auf einfache Weise andere Übersetzungsspannen erzielbar.

Eine Übersetzung zwischen der Antriebswelle 7 und der Abtriebswelle 11 ist mit der erfindungsgemäßen Doppelkegelgetriebeeinrichtung 1 durch eine Verlagerung des Ellipsoids 15 entlang der Achse 23 kontinuierlich veränderbar.

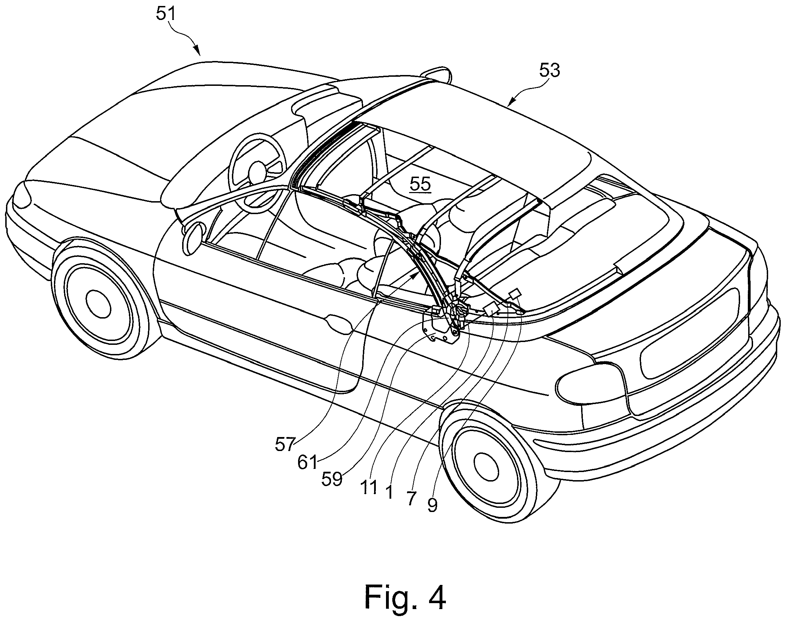

In Fig. 4 ist ein stark vereinfachtes Cabriolet-Fahrzeug 51 ersichtlich, welches vorliegend ein Soft-Top-Verdeck 53 aufweist. Das Verdeck 53 ist zwischen der gezeigten, einen Fahrgastraum 55 überspannenden geschlossenen Position und einer den Fahrgastraum 55 zumindest teilweise freigebenden offenen Position mittels eines Hauptlenkers 61 eines Verdeckgestänges 57 verlagerbar, welcher an einem Hauptlager 59 angelenkt ist. Der Hauptlenker 61 ist hierzu mit der Abtriebswelle 11 der in der Fig. 4 lediglich stark schematisiert gezeigten Doppelkegelgetriebeeinrichtung 1 gekoppelt, wobei die Abtriebswelle 11 an einem dem zweiten Kegelrad 5 abgewandten Ende mit dem Hauptlenker 61 zusammenwirkt und diesen insbesondere um seine hauptlagerfeste Lagerung verschwenken kann. Zum Antrieb des Hauptlenkers 61 ist der Elektromotor 9 vorgesehen, welcher über die Antriebswelle 7 mit der Doppelkegelgetriebeeinrichtung 1 zusammenwirkt.

Die erfindungsgemäße Doppelkegelgetriebeeinrichtung 1 ist vorzugsweise bei Anwendungsfällen einsetzbar, bei denen über einem kompletten durchzuführenden Bewegungsablauf eines mit der Abtriebswelle gekoppelten Elements ein stark schwankender Momentenverlauf vorliegt. Dies kann beispielsweise bei anzutreibenden Elementen im Bereich des Kraftfahrzeugbaus der Fall sein.

Die erfindungsgemäße Doppelkegelgetriebeeinrichtung 1 kann vorzugsweise vorgesehen sein, um eine Übersetzung zwischen einem Antrieb und einem Hauptlenker - wie in Fig. 4 gezeigt - oder einer Hauptsäule eines Verdecks 53 oder zwischen einem Antrieb und einem Schiebedachs stufenlos einzustellen. Weiterhin kann die Doppelkegelgetriebeeinrichtung 1 auch zur Einstellung einer Übersetzung bei einem Antrieb eines Heckdeckels, eines Verdeckkastendeckels, von Gestängeklappen, eines Stoffhaltebügels, einer Hutablage oder anderen bewegbaren Elementen vorgesehen sein.

## Patentansprüche

1. Doppelkegelgetriebeeinrichtung (1) mit einem ersten mit einer Antriebswelle (7) koppelbaren Kegelrad (3) und einem zweiten mit einer Abtriebswelle (11) koppelbaren Kegelrad (5), wobei zur Kraftübertragung von dem ersten Kegelrad (3) auf das zweite (5) Kegelrad ein jeweils mit einem Bereich (18) einer Mantelfläche (29) des ersten Kegelrads (3) und einem Bereich (20) einer Mantelfläche (31) des zweiten Kegelrads (5) zusammenwirkendes Kraftübertragungselement (17) vorgesehen ist,
**dadurch gekennzeichnet,**
**dass** das Kraftübertragungselement (17) ein schlauchförmiges, zumindest teilweise flexibles Element (17) ist, wobei eine Kraftübertragung von dem Kraftübertragungselement (17) auf das jeweilige Kegelrad (3, 5) durch einen von einem balligen Element (15) verursachten Kontakt des schlauchförmigen Elements (17) mit dem jeweiligen Kegelrad (3, 5) stattfindet, und wobei das ballige Element (15) zur Einstellung einer Übersetzung zwischen dem ersten Kegelrad (3) und dem zweiten Kegelrad (5) relativ zu dem ersten Kegelrad (3) und dem zweiten Kegelrad (5) verlagerbar ist.

2. Doppelkegelgetriebeeinrichtung nach Anspruch 1,
**dadurch gekennzeichnet,**
**dass** das schlauchförmige Element (17) zumindest bereichsweise an seiner dem balligen Element (15) zugewandten Fläche (33) beschichtet ist.

3. Doppelkegelgetriebeeinrichtung nach einem der Ansprüche 1 oder 2,
**dadurch gekennzeichnet,**
**dass** eine Schmierung vorgesehen ist, wobei ein Innenraum (35) des schlauchförmigen Elements (17) mit einem Schmiermittel versehen ist.

4. Doppelkegelgetriebeeinrichtung nach einem der Ansprüche 1 bis 3,
**dadurch gekennzeichnet,**
**dass** eine den Kegelrädern (3, 5) zugewandte Oberfläche (21) des schlauchförmigen Elements (17) aufgeraut ist.

5. Doppelkegelgetriebeeinrichtung nach einem der Ansprüche 1 bis 4,
**dadurch gekennzeichnet,**
**dass** eine den Kegelrädern (3, 5) zugewandte Oberfläche (21) des schlauchförmigen Elements (17) beschichtet ist.

6. Doppelkegelgetriebeeinrichtung nach einem der Ansprüche 1 bis 5,
**dadurch gekennzeichnet,**
**dass** das schlauchförmige Element (17) mit einem Kunststoff, insbesondere einem thermoplastischen Elastomer ausgebildet ist.

7. Doppelkegelgetriebeeinrichtung nach einem der Ansprüche 1 bis 6,
**dadurch gekennzeichnet,**
**dass** ein mit den Kegelrädern (3, 5) zusammenwirkender Querschnitt des balligen Elements (15) gegenüber einem Innendurchmesser (D_{I}) des schlauchförmigen Elements (17) in unbelastetem Zustand ein Übermaß aufweist.

8. Doppelkegelgetriebeeinrichtung nach einem der Ansprüche 1 bis 7,
**dadurch gekennzeichnet,**
**dass** das ballige Element (15) fest mit einer Welle (13) verbunden ist, über welche das ballige Element (15) in einem Gehäuse (19) gelagert ist.

9. Doppelkegelgetriebeeinrichtung nach einem der Ansprüche 1 bis 8,
**dadurch gekennzeichnet,**
**dass** das schlauchförmige Element (17) über eine Lagerung drehbar in einem Gehäuse (19) gelagert ist.

10. Doppelkegelgetriebeeinrichtung nach Anspruch 9,
**dadurch gekennzeichnet,**
**dass** die Lagerung des schlauchförmigen Elements (17) integral mit dem schlauchförmigen Element (17) ausgeführt ist.

11. Doppelkegelgetriebeeinrichtung nach einem der Ansprüche 1 bis 10,
**dadurch gekennzeichnet,**
**dass** das ballige Element (15) zur Verstellung einer Übersetzung zwischen dem ersten Kegelrad (3) und dem zweiten Kegelrad (5) im Wesentlichen translatorisch verlagerbar ist.

12. Doppelkegelgetriebeeinrichtung nach einem der Ansprüche 1 bis 11,
**dadurch gekennzeichnet,**
**dass** zur Verlagerung des balligen Elements (15) eine Antriebseinrichtung vorgesehen ist.

13. Doppelkegelgetriebeeinrichtung nach einem der Ansprüche 1 bis 12,
**dadurch gekennzeichnet,**
**dass** das ballige Element (15) als Kugel oder Ellipsoid ausgebildet ist.

## Claims

1. A double cone transmission device (1) comprising a first bevel gear (3), which can be coupled with a drive shaft (7), and a second bevel gear (5), which can be coupled with a driven shaft (11), wherein a power transmission element (17) respectively cooperating with a region (18) of a lateral surface (29) of the first bevel gear (3) and a region (20) of a lateral surface (31) of the second bevel gear (5) is provided for power transmission from the first bevel gear (3) to the second bevel gear (5),
**characterised in that**
the power transmission element (17) is a tubular, at least partly flexible element (17), wherein power transmission from the power transmission element (17) to the respective bevel gear (3, 5) occurs by a contact of the tubular element (17) with the respective bevel gear (3, 5), caused by a crowned element (15), and wherein said crowned element (15) is displaceable relative to the first bevel gear (3) and the second bevel gear (5) in order to adjust a gear ratio between the first bevel gear (3) and the second bevel gear (5).

2. The double cone transmission device according to claim 1,
**characterised in that**
the tubular element (17) is coated, at least in some regions, on its surface (33) facing the crowned element (15).

3. The double cone transmission device according to any one of claims 1 or 2,
**characterised in that**
lubrication is provided, with an interior (35) of the tubular element (17) being provided with a lubricant.

4. The double cone transmission device according to any one of claims 1 to 3,
**characterised in that**
a surface (21) of the tubular element (17) facing the bevel gears (3, 5) is roughened.

5. The double cone transmission device according to any one of claims 1 to 4,
**characterised in that**
a surface (21) of the tubular element (17) facing the bevel gears (3, 5) is coated.

6. The double cone transmission device according to any one of claims 1 to 5,
**characterised in that**
the tubular element (17) is made using a plastic material, in particular a thermoplastic elastomer.

7. The double cone transmission device according to any one of claims 1 to 6,
**characterised in that** a cross-section of the crowned element (15) cooperating with the bevel gears (3, 5) is oversized with respect to an internal diameter (D_{I}) of the tubular element (17) in an unloaded state.

8. The double cone transmission device according to any one of claims 1 to 7,
**characterised in that**
the crowned element (15) is firmly connected to a shaft (13) via which the crowned element (15) is supported in a housing (19).

9. The double cone transmission device according to any one of claims 1 to 8,
**characterised in that**
the tubular element (17) is rotatably supported in a housing (19) via a bearing.

10. The double cone transmission device according to claim 9,
**characterised in that**
the bearing of the tubular element (17) is provided integrally with the tubular element (17).

11. The double cone transmission device according to any one of claims 1 to 10,
**characterised in that**
the crowned element (15) is movable substantially translationally for adjustment of a gear ratio between the first bevel gear (3) and the second bevel gear (5).

12. The double cone transmission device according to any one of claims 1 to 11,
**characterised in that**
a drive means is provided to displace the crowned element (15).

13. The double cone transmission device according to any one of claims 1 to 12,
**characterised in that**
the crowned element (15) is provided as a ball or an ellipsoid.

## Revendications

1. Dispositif d'engrenage biconique (1) comportant une première roue conique (3), qui peut être couplée à un arbre d'entraînement (7), et une deuxième roue conique (5), qui peut être couplée à un arbre entraîné (11), où l'on prévoit un élément de transmission de force (17), qui coopère respectivement avec une région (18) d'une surface d'enveloppe (29) de la première roue conique (3) et une région (20) d'une surface d'enveloppe (31) de la deuxième roue conique (5), pour la transmission de force de la première roue conique (3) à la deuxième roue conique (5),
**caractérisé en ce que**
ledit élément de transmission de force (17) est un élément tubulaire (17) au moins partiellement flexible, la transmission de force de l'élément de transmission de force (17) à la roue conique respective (3, 5) se faisant par un contact dudit élément tubulaire (17) avec la roue conique respective (3, 5), causé par un élément bombé (15), et ledit élément bombé (15) étant déplaçable par rapport à la première roue conique (3) et la deuxième roue conique (5) afin de régler un rapport de transmission entre la première roue conique (3) et la deuxième roue conique (5).

2. Dispositif d'engrenage biconique selon la revendication 1,
**caractérisé en ce que**
l'élément tubulaire (17) est enduit, au moins par endroits, sur sa face (33) tournée vers l'élément bombé (15).

3. Dispositif d'engrenage biconique selon l'une quelconque des revendications 1 ou 2,
**caractérisé en ce que**
l'on prévoit une lubrification en prévoyant un lubrifiant à l'intérieur (35) de l'élément tubulaire (17).

4. Dispositif d'engrenage biconique selon l'une quelconque des revendications 1 à 3, **caractérisé en ce qu'**une surface (21) de l'élément tubulaire (17) tournée vers les roues coniques (3, 5) est rendue rugueuse.

5. Dispositif d'engrenage biconique selon l'une quelconque des revendications 1 à 4, **caractérisé en ce qu'**une surface (21) de l'élément tubulaire (17) tournée vers les roues coniques (3, 5) est enduite.

6. Dispositif d'engrenage biconique selon l'une quelconque des revendications 1 à 5,
**caractérisé en ce que**
l'élément tubulaire (17) est réalisé en matière plastique, notamment en élastomère thermoplastique.

7. Dispositif d'engrenage biconique selon l'une quelconque des revendications 1 à 6, **caractérisé en ce qu'**une section transversale de l'élément bombé (15) coopérant avec les roues coniques (3, 5) présente un supplément de dimension par rapport à un diamètre intérieur (D_{I}) de l'élément tubulaire (17) à l'état non chargé.

8. Dispositif d'engrenage biconique selon l'une quelconque des revendications 1 à 7,
**caractérisé en ce que**
l'élément bombé (15) est fermement relié à un arbre (13) par lequel l'élément bombé (15) est supporté dans un boîtier (19).

9. Dispositif d'engrenage biconique selon l'une quelconque des revendications 1 à 8,
**caractérisé en ce que**
l'élément tubulaire (17) est supporté à rotation dans un boîtier (19) par un support.

10. Dispositif d'engrenage biconique selon la revendication 9,
**caractérisé en ce que**
le support de l'élément tubulaire (17) est formé d'un seul tenant avec l'élément tubulaire (17).

11. Dispositif d'engrenage biconique selon l'une quelconque des revendications 1 à 10,
**caractérisé en ce que**
l'élément bombé (15) est mobile sensiblement en translation afin de régler un rapport de transmission entre la première roue conique (3) et la deuxième roue conique (5).

12. Dispositif d'engrenage biconique selon l'une quelconque des revendications 1 à 11,
**caractérisé en ce que**
l'on prévoit un moyen d'entraînement afin de déplacer l'élément bombé (15).

13. Dispositif d'engrenage biconique selon l'une quelconque des revendications 1 à 12,
**caractérisé en ce que**
l'élément bombé (15) est réalisé sous forme d'une sphère ou d'un ellipso.
